# EUROPEAN PATENT SPECIFICATION

(11) **EP 1 519 066 B1**
(45) Date of publication and mention of the grant of the patent: **16.07.2008**
(21) Application number: 04022449.5
(22) Date of filing: 21.09.2004
(51) Int. Cl.: F16D 23/12, F16D 48/06

(54) **Assembling method of clutch actuator and electronic control unit**
Verfahren zum Einbau einer Kupplungsbetätigung mit elektronischer Steuerung.
Procédé d'installation d'un actionneur d'embrayage avec dispositif de commande éléctronique.

(30) Priority: 26.09.2003 JP 2003334588
(43) Date of publication of application: 30.03.2005
(73) Proprietor: AISIN SEIKI KABUSHIKI KAISHA, Kariya-shi, Aichi-ken 448-8650 (JP)
(72) Inventor: Naito, Takao, 2-chome Kariya-shi Aichi-ken 448-8650 (JP); Soga, Yoshitaka, 2-chome Kariya-shi Aichi-ken 448-8650 (JP)
(74) Representative: Kramer - Barske - Schmidtchen

(56) References cited:
- EP-A- 1 209 378

## Description

### FIELD OF THE INVENTION

This invention generally relates to an assembling method of clutch actuator and an electronic control unit. The clutch actuator includes an output rod which moves in longitudinal direction relative to a main body of the clutch actuator by electronic controlling means and operates condition of a clutch via a release fork by moving the output rod in longitudinal direction. More particularly, this invention pertains to an assembling method of clutch actuator wherein a clutch actuator is assembled with high dimensional accuracy without using a special assembling tool.

### BACKGROUND

In an automated manual transmission (AMT) which is developed to improve fuel consumption of a vehicle by controlling shift change of a transmission mechanism based on existing manual transmission (MT) so as to make optimal condition using a computer, a clutch mechanism is provided between an engine and the transmission mechanism to make operate the clutch mechanism automatically by electronic controlling means. To reduce manufacturing cost, operation of the clutch mechanism is carried out by operation of a clutch actuator via a release fork. Configuration of the clutch actuator and the release fork is that the release fork is directly operated by the clutch actuator.
EP 1 519 066 A1, from which the preamble of amended claim 1 starts, discloses an assembling method of an clutch actuator including an output rod movable in longitudinal direction relative to a main body of the clutch actuator by an electronic controlling means and configured to change clutch condition of a clutch mechanism operated by movement of the output rod via a release fork. Main body of the clutch actuator may be assembled to a casing of the clutch. In this configuration (in which the clutch actuator directly operates the release fork), slipping of a clutch and durable deterioration caused by an abrasion of components may be taken place when assembled accuracy between the release fork and the clutch actuator is poor, or parts are assembled with high pushing force. Therefore, the clutch actuator has to be accurately assembled to the release fork with an adequate load. An assembling tool including an adjustment screw for adjusting assembling position of the clutch actuator is commonly used for obtaining high assembling accuracy. (Any documents related to the assembling tool including the adjustment screw have not been found.)

However, adjustment of the clutch actuator position is carried out by rotating the adjustment screw in use of the assembling tool including the adjustment screw. Therefore, assembling operation becomes complicated, and there is the possibility to make a mistake about number of rotation of the adjustment screw.

In addition, when the clutch actuator is changed to other clutch actuator in a narrow space, there is a possibility that the assembling tool is not available. In such case, sufficient working space may be secured by removing parts surrounding the clutch actuator.

The first target of the present invention is to propose an assembling method of clutch actuator wherein a clutch actuator is assembled with high dimensional accuracy without using a special assembling tool and an electronic control device for assembling a clutch actuator.

The second target of the present invention is to propose an assembling method of clutch actuator for easy assembling operation and an electronic control device for assembling a clutch actuator.
The third target of the present invention is to propose an assembling method of a clutch actuator which provides an adequate load to the release fork and at the same time avoids durable deterioration caused by an abrasion of components when assembling.

### Summary of the invention

A solution of the targets as mentioned above is achieved by an assembling method of a clutch actuator according to appended claim 1.
Sub claims 2 to 4 are directed towards advantageous embodiments of the inventive assembling method.

### Brief description of the drawings

The foregoing and additional features and characteristics of the present invention will become more apparent from the following detailed description considered with reference to the accompanying drawings, wherein:

FIG. 1 illustrates a view showing a conformation of a drive unit for a vehicle that an assembling method of clutch actuator is used in accordance with an embodiment of the present invention;

FIG. 2 illustrates a cross sectional view of a clutch actuator in accordance with an embodiment of the present invention; and

FIG. 3 shows a flow chart of an assembling method of clutch actuator in accordance with an embodiment of the present invention.

### DETAILED DESCRIPTION

A preferred embodiment of the present invention will be described hereinbelow in detail with reference to the accompanying drawings.

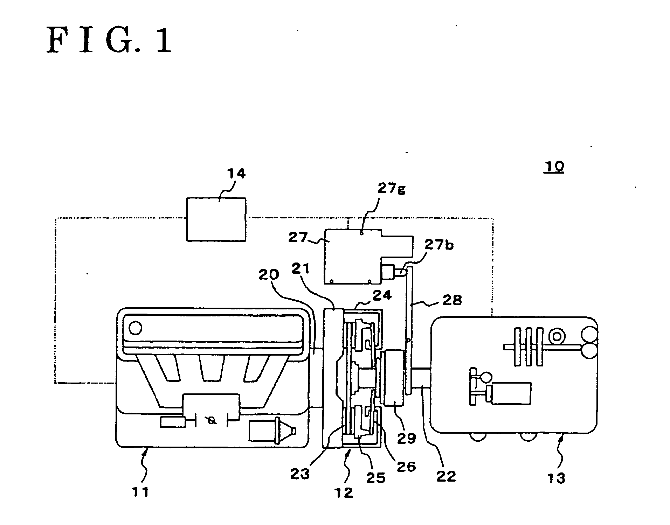

FIG. 1 shows a schematic view of a composition of a drive unit 10 of a vehicle wherein an assembling method of clutch actuator is used in accordance with an embodiment of the present invention.

The drive unit 10 includes an engine 11 serves as a generator of driving force, a clutch mechanism 12, a transmission mechanism 13 and an electronic control unit (ECU, or an electronic controlling means) 14.

The clutch mechanism 12 uses a friction clutch (a dry, single plate and diaphragm spring type) and includes a flywheel 21, a clutch disk 23, a clutch cover 24, a pressure plate 25, a diaphragm spring 26, a clutch actuator 27, a release fork 28 and a release bearing 29. The flywheel 21 is assembled to a crankshaft 20 of the engine 11. The clutch disk 23 is integrally connected with a clutch output shaft 22 for transmitting driving force generated at the engine 11 to the transmission mechanism 13. The pressure plate 25 is provided to the clutch cover 24. The diaphragm spring 26 biases the pressure plate 25 to the direction of the flywheel 21 and the clutch disk 23 is held between the flywheel 21 and the pressure plate 25 with pushed state for transmitting driving force from the engine 11 to the transmission mechanism 13. The release bearing 29 is provided to push inner end of the diaphragm spring 28 to the left direction in FIG. 1 for disengaging the clutch. In this disengaging operation, the release bearing 28 is moved by actuation of the clutch actuator 27 via the release fork 28.

The clutch actuator 27 is electronically connected to the electronic control unit 14 via a connector, includes an output rod 27b moved in longitudinal direction relative to a main body 27a of the clutch actuator 27 controlled by the electronic control unit 14. Clutch operation (engaging and disengaging of the clutch) of the clutch mechanism 12 is carried out by movement of the output rod 27b via the release fork 28. The clutch actuator 27 is attached to a predetermined position of a casing (not shown) accommodating the clutch mechanism 12. The main body 27a includes plural fixing flanges 27c for fixing with plural bolts 27g. A bolt hole (elongated hole) 27d is provided at the fixing flange 27c with elongated shape which has larger width than thread diameter of the bolt 27g. The clutch actuator 27 is assembled by fixing the fixing flange 27c with the bolt 27g. The output rod 27b moves by an electric motor 27e via a worm gear (a set of a worm 27h and a worm wheel 27i). It is preferable to provide a spring 27f (a coil spring) assisting power of the electric motor 27e in the clutch actuator 27 for downsizing the electric motor 27e. In addition, a stroke sensor (not shown) for detecting rotating angle of the worm wheel 27i (equivalent of detection of rod stroke) is provided on the same axis of the worm wheel 27i.

The release fork 28 is a lever which slides the release bearing 29 to axial direction of the clutch output shaft 22 when driving force from the engine 11 is cut. In this condition, the clutch mechanism 12 operated from outside of the clutch cover 24.

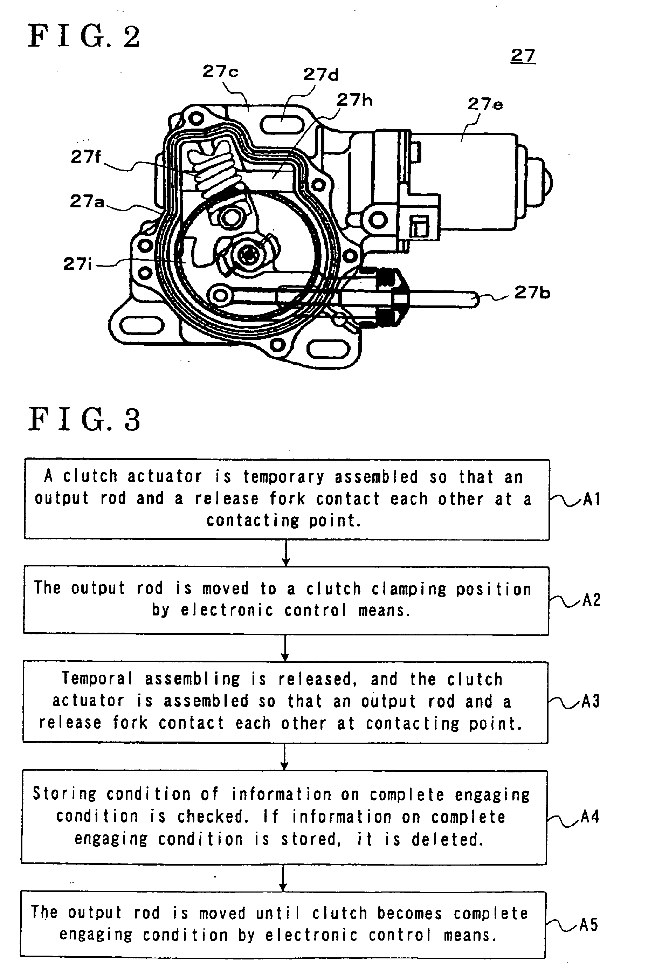

The electronic control unit 14 includes a microcomputer and executes signal processing based on programs stored in a ROM with using temporal storing function of a RAM. The electronic control unit 14 includes an engine ECU and a transmission ECU, and data are transmitted between them. The electronic control device 14 has transmission controlling function and gearshift controlling function of the of the clutch mechanism 12. To control the clutch mechanism 12 and the transmission mechanism 13, several parts (not shown; such as lever position sensor, upshift switch, downshift switch, brake switch, input rotation sensor, gear position sensor, stroke sensor, ignition switch, diagnosis terminal, battery) are electrically connected to the electronic control unit 14. These parts are provided to obtain signals related to temperature of hydraulic oil, lever position of a shift lever, upshift and downshift by manual shift, on / off condition of a brake, number of input rotation, gear position as shift position of the transmission mechanism 13, stroke of the clutch mechanism 12 (namely, stroke of the clutch actuator 27), respectively. Shift controlling of the transmission mechanism 13 (including switching of forward / backward movement) and engaging / disengaging control of the clutch mechanism 12 (corresponding to condition of the transmission mechanism 13) are executed by controlling the clutch actuator 27, a select actuator and a shift actuator based on signals from above mentioned parts and the engine ECU. When the clutch actuator 27 is assembled to the clutch mechanism 12, the electronic control unit 14 executes a first controlling for moving the output rod 27b to an clamping position and a second controlling for moving the output rod 27b to clutch disengaging direction (right direction in FIG. 1 and FIG. 2) with a predetermined distance. The clutch clamping position (assembling position) of the output rod 27b means a position of the output rod 27b which serves as a control point at assembling of the clutch actuator 27 (right before full assembling). In addition, complete engaging position of clutch means a position in which the clutch can be engaged without slipping.

Next, an assembling method of the clutch actuator in accordance with the embodiment will be explained. FIG. 3 shows a flow chart of the assembling method of clutch actuator. In this embodiment, an assembling method of a brand-new clutch actuator is mentioned. The mentioned method is also applicable to reassembling of the clutch actuator after the clutch actuator is removed (such as a situation of repairing). The drive unit 10 (which is a physical object for assembling the clutch actuator) is regarded as an already assembles " without the clutch actuator.

First, the clutch actuator 27 is temporary assembled so that the output rod 27b and the release fork 28 contact each other at a contacting point (a step A1). In this condition, the contacting point is defined as a position in which the output rod 27b and the release fork 28 are contacting each other and the clutch is in engaging condition without loading. In addition, the "temporary assembling" is defined that at least the clutch actuator 27 is assembled (tightened using bolts 27g) to a predetermined position of the casing (not shown), and the electronic control device 14 is connected to the clutch actuator 27 and the stroke sensor via the connector (assembling of a battery may be included according to need). The step A1 may be omitted if the output rod 27b of the clutch actuator 27 is placed at the clutch clamping position. The clutch clamping position (assembling position) of the output rod 27b means a position of the output rod 27b which serves as a control point at assembling of the clutch actuator 27 (right before full assembling).

Next, the output rod 27b is moved to the clutch clamping position (a step A2). This step is carried out during engine being stopped. This adjustment (the step A2) is carried out since the output rod 27b of new clutch actuator 27 is not always placed at the clutch clamping position. The electronic controlling is carried out by the electronic control unit 14. The step A2 may be omitted if the output rod 27b of the clutch actuator 27 is placed at the clutch clamping position.

Next, temporal assembling is released, and the clutch actuator 27 is assembled at a contacting position of the output rod 27a and the release fork 28 (a step A3). Releasing of the temporal assembling means a condition that the bolt 27g fastened at the fixing flange 27c is slackened (but the bolt 27g is not fully unbolted), and the connector provided between the electronic controlling unit 14 and the clutch actuator 27 and the stroke sensor is kept as connected state, and the battery is also kept as connected state. In addition, the output rod 27b is kept to place at the clutch clamping point even if the bolt 27g is slackened. The definition of the contacting position and the clutch clamping point is equivalent to the step A1 thereof. "Assembling" means the process that the fixing flange 27c of the clutch actuator 27 is tightened by the bolt 27g. It may include connecting process of the electronic control unit 14 and both the clutch actuator 17 and the stroke sensor using the connector (and also connecting process of the battery according to need) if the output rod 27b of the clutch actuator 27 is placed at the clutch clamping position.

Next, for the electronic control unit 14, storing condition of information on complete engaging condition of the clutch is checked. If the information on complete engaging condition is stored, they are deleted (a step A4). This deleting process is carried out since there is a possibility to remain a previous information about complete engaging condition of the clutch in the electronic control unit 14 as in the case of reassembling of the clutch actuator after the clutch actuator is removed (such as a situation of repairing). The information on complete engaging condition of the clutch is also called as learning information and includes information on a position of the output rod 27b when the clutch is in completely engaging condition. If any information on completely engaging position of the clutch according to moving of the clutch to the completely engaging position is not stored in the electric control unit 14, the process proceeds to a step A5.

Finally, The output rod 27b is moved until the clutch is completely engaged by electronic controlling (the step A5). The step A5 is carried out in engine stopping state. The electronic controlling is carried out by the electronic control unit 14. Information about completely engaging position of the clutch when the clutch reaches the completely engaging position is stored in the electronic control unit 14.

As described above, according to the present embodiment for assembling method of a clutch actuator, the clutch actuator may be easily attached with high dimensional accuracy without using a special assembling tool and an electric control device for assembling a clutch actuator.

The principles, a preferred embodiment and mode of operation of the present invention have been described in the foregoing specification. However, the invention which is intended to be protected is not to be construed as limited to the particular embodiment disclosed. Further, the embodiment described herein is to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.
It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An assembling method of a clutch actuator (27) including an output rod (27b) movable in longitudinal direction relative to a main body (27a) of the clutch actuator by electronic controlling means and configured to change clutch condition operated by movement of the output rod via a release fork (28),
**characterized in that** the assembling method of the clutch actuator comprises the following steps:
- a temporal assembling of the clutch actuator so that the output rod and the release fork contact each other at a contacting point;
- moving the output rod to a predetermined clamping position;
- assembling the clutch actuator so that the output rod and the release fork contact each other at the contacting point after the temporal assembling is released; and
- moving the output rod until the clutch becomes in a complete engaging condition by the electronic controlling means.

2. An assembling method of a clutch actuator according to claim 1, wherein the temporal assembling process is carried out using an elongated hole (27d) provided at a fixing flange (27c) which is integrally formed with the main body (27a) of the clutch actuator.

3. An assembling method of a clutch actuator according to claim 1 or 2, wherein the assembling method includes a process for judging whether an information on the complete engaging condition of the clutch (12) is stored in an electronic control device (14) or not, and a process for deleting the information on the complete engaging condition of the clutch if the information on the complete engaging condition of the clutch is stored in an electronic control device.

4. An assembling method of a clutch actuator according to claim 1, 2 or 3, wherein the moving process for moving the output rod (27b) until clutch complete engaging condition by electronic controlling means is carried out during an engine (11) being stopped.

## Patentansprüche

1. Verfahren zum Einbauen einer Kupplungsbetätigungsvorrichtung (27), die einen mittels einer elektronischen Steuereinrichtung in Längsrichtung relativ zu einem Hauptgehäuse (27a) der Kupplungsbetätigungsvorrichtung beweglichen Ausgabestab (27b) aufweist und für eine Änderung des Kupplungszustandes konfiguriert ist, der durch Bewegen des Ausgabestabes über eine Ausrückgabel (28) betrieben wird,
**dadurch gekennzeichnet, dass**
das Verfahren zum Einbauen der Kupplungsbetätigungsvorrichtung folgende Schritte enthält:
- zeitweises Einbauen der Kupplungsbetätigungsvorrichtung derart, dass der Ausgangsstab und die Ausrückgabel sich an einer Berührstelle berühren;
- Bewegen des Ausgangsstabes in eine vorbestimmte Klemmposition;
- Einbauen der Kupplungsbetätigungsvorrichtung derart, dass der Ausgangsstab und die Ausrückgabel sich an der Berührstelle berühren, nachdem der zeitweilige Einbau gelöst ist; und
- Bewegen des Ausgangsstabes bis die Kupplung in einen vollständigen Eingriffszustand gelangt mittels der elektronischen Steuereinrichtung.

2. Verfahren zum Einbauen einer Kupplungsbetätigungsvorrichtung nach Anspruch 1, wobei das zeitweilige Einbauverfahren unter Verwendung eines Langloches (27d) durchgeführt wird, das an einem Befestigungsflansch (27c) vorgesehen ist, der mit dem Hauptgehäuse (27a) der Kupplungsbetätigungsvorrichtung integral ausgebildet ist.

3. Verfahren zum Einbauen einer Kupplungsbetätigungsvorrichtung nach Anspruch 1 oder 2, wobei das Einbauverfahren einen Vorgang zum Beurteilen, ob eine Information über den vollständigen Eingriffszustand der Kupplung (12) in einer elektronischen Steuervorrichtung (14) gespeichert ist oder nicht enthält, und einen Vorgang zum Löschen der Information über den vollständigen Eingriffszustand der Kupplung, wenn die Information über den vollständigen Eingriffszustand der Kupplung in einer elektronischen Steuervorrichtung gespeichert ist.

4. Verfahren zum Einbauen einer Kupplungsbetätigungsvorrichtung nach einem der Ansprüche 1, 2 oder 3, wobei der Bewegungsvorgang zum Bewegen des Ausgangsstabes (27b) bis zum vollständigen Eingriffzustand der Kupplung mittels der elektronischen Steuereinrichtung bei gestopptem Motor (11) durchgeführt wird.

## Revendications

1. Procédé de montage d'un actionneur d'embrayage (27) comprenant une tige de sortie (27b) qui peut être amenée à se déplacer dans une direction longitudinale par rapport à un corps principal (27a) de l'actionneur d'embrayage par des moyens de commande électronique, et qui est configurée pour modifier une condition d'embrayage commandée par un mouvement de la tige de sortie par le biais d'une fourchette de débrayage (28),
**caractérisé en ce que** le procédé de montage de l'actionneur d'embrayage comprend les étapes suivantes :
- un montage temporel de l'actionneur d'embrayage de façon à ce que la tige de sortie et la fourchette de débrayage viennent en contact l'une avec l'autre au niveau d'un point de contact ;
- un déplacement de la tige de sortie vers une position de blocage prédéterminée ;
- un montage de l'actionneur d'embrayage de façon à ce que la tige de sortie et la fourchette de débrayage viennent en contact l'une avec l'autre au niveau du point de contact, une fois que le montage temporel est désengagé ; et
- un déplacement de la tige de sortie jusqu'à ce que l'embrayage se trouve dans une condition complètement engagée par les moyens de commande électronique.

2. Procédé de montage d'un actionneur d'embrayage selon la revendication 1, dans lequel la procédure de montage temporel est accomplie en utilisant un trou allongé (27d) réalisé au niveau d'un flasque de fixation (27c) qui est formé intégralement avec le corps principal (27a) de l'actionneur d'embrayage.

3. Procédé de montage d'un actionneur d'embrayage selon la revendication 1 ou 2, dans lequel le procédé de montage comprend une procédure servant à déterminer si des informations relatives à la condition complètement engagée de l'embrayage (12) sont enregistrées - ou non - dans un dispositif de commande électronique (14), et une procédure servant à supprimer les informations relatives à la condition complètement engagée de l'embrayage si les informations relatives à la condition complètement engagée de l'embrayage sont enregistrées dans un dispositif de commande électronique.

4. Procédé de montage d'un actionneur d'embrayage selon la revendication 1, 2 ou 3, dans lequel la procédure de déplacement qui concerne un déplacement de la tige de sortie (27b) jusqu'à la condition complètement engagée de l'embrayage par les moyens de commande électronique est accomplie pendant qu'un moteur (11) est arrêté.
